Europäisches Patentamt

(19) European Patent Office

Office européen des brevets

(11) Publication number: **0 021 618**
**A1**

(12) **EUROPEAN PATENT APPLICATION**

(21) Application number: **80301779.7**

(22) Date of filing: **29.05.80**

(51) Int. Cl.³: **C 08 F 2/08**
**C 09 D 3/00**

(30) Priority: **21.06.79 GB 7921615**

(43) Date of publication of application:
**07.01.81 Bulletin 81/1**

(84) Designated Contracting States:
**AT BE DE FR GB IT NL SE**

(71) Applicant: **IMPERIAL CHEMICAL INDUSTRIES LIMITED**
**Imperial Chemical House Millbank**
**London SW1P 3JF(GB)**

(72) Inventor: **Backhouse, Alan James**
**Monks Wood Monks Close St. Mary's Hill**
**South Ascot Berkshire(GB)**

(72) Inventor: **Palluel, Auguste Louis Lucien**
**11, Bolton Crescent**
**Windsor Berkshire(GB)**

(74) Representative: **Wood, Dennis John Cecil et al,**
**Imperial Chemical Industries Limited Legal Department:**
**Patents Thames House North Millbank**
**London SW1P 4QG(GB)**

(54) **Production of polymer microparticles and coating compositions containing them.**

(57) Crosslinked addition polymer microparticles are produced by dispersion polymerisation of ethylenically unsaturated monomers in aliphatic hydrocarbon liquid, in the presence of a specified dispersion stabiliser, at least one of the monomers containing a hydroxymethylamino or alkoxymethylamino group and at least one other of the monomers containing a functional group, such as a hydroxyl or carboxyl group, which is capable of reacting with the aforesaid group under the polymerisation conditions. The microparticles may be incorporated into coating compositions, preferably in association with an auxiliary polymer which is soluble in the liquid diluent of the composition and is compatible with the film-forming polymer thereof, with resulting improvement in the application characteristics of the composition.

Croydon Printing Company Ltd.

302u°|ɛ°

# PRODUCTION OF POLYMER MICROPARTICLES
# AND COATING COMPOSITIONS CONTAINING THEM

This invention relates to crosslinked polymer microparticles, to a process for making such particles and to coating compositions containing the particles.

The preparation of polymeric microparticles and their incorporation into coating compositions comprising a film-forming polymer have been described, for example in British Patents Nos. 967,051; 1,242,051; 1,451,948 and 1,538,151, and in United States Patent No. 4,025,474. In certain of these publications the particles in question are referred to as "microgel" particles, in which case the polymer of which the particles are composed is crosslinked to a greater or lesser extent and thereby rendered insoluble in any inert liquid diluent in which the film-forming polymer of the coating composition may be carried (although it may be swollen by that diluent). In other instances, the microparticles may be non-crosslinked and retain their identity in the coating composition by reason of the polymer of which they are composed being inherently insoluble in the diluent.

In general, such microparticles are made by processes of emulsion or dispersion polymerisation of monomers in suitable liquids in the presence of stabilising entities for the particles which are formed, whereby the particles are prevented from flocculating or aggregating. Where aqueous emulsion polymerisation processes are used, the resulting microparticles are normally charge-stabilised in the manner well-known in the art. Where processes of dispersion polymerisation in non-aqueous liquids are employed, the microparticles are sterically stabilised in the manner described in "Dispersion Polymerisation in Organic Media", ed. K.E.J. Barrett (John Wiley, 1975) and in many patent specifications such as British Specifications Nos. 934,038; 941,305; 1,052,241; 1,122,397; 1,143,404 and 1,231,614. Where the microparticles are required to be cross-linked, this may be achieved in various ways. One procedure is to include, in the monomers being polymerised, material which is polyfunctional with respect to the polymerisation reaction, for example, in the case where vinyl-type monomers are involved, by including a comonomer containing two or more ethylenically unsaturated groups. In a variant of this procedure, applicable to the case where a dispersion polymerisation process involving a steric stabiliser is used, the polyfunctionality with respect to the polymerisation reaction is provided in the stabiliser either additionally to, or instead of, its being provided in the monomers themselves.

A different way of bringing about cross-linking of the microparticles consists in introducing, into the monomer charge being polymerised, two comonomers carrying between them pairs of mutually chemically reactive groups, in addition to the polymerisable unsaturated groups, by reaction of which groups covalent cross-links between the polymer chains may be generated.

A variety of such pairs of mutually reactive groups has been proposed, for example epoxy and carboxyl, amine and carboxyl, epoxide and carboxylic anhydride, amine and carboxylic anhydride, hydroxyl and carboxylic anhydride, amine and carboxylic acid chloride, alkylene-imine and carboxyl, and organo-alkoxysilane and carboxyl.

We have now found that, in the preparation of cross-linked polymer microparticles by dispersion polymerisation techniques, cross-linking of the polymer can advantageously be effected if the monomers undergoing polymerisation comprise a monomer which contains a hydroxymethylamino or alkoxymethylamino group, and a monomer which contains a group capable of reacting with that other group under the conditions of polymerisation.

According to the present invention there is provided a process for the production of cross-linked addition polymer microparticles, comprising the dispersion polymerisation of ethylenically unsaturated monomers in an aliphatic hydrocarbon liquid which is a solvent for the monomers but is a non-solvent for the polymer produced, in the presence of a dispersion stabiliser the molecule of which comprises at least one polymeric component which is solvated by the hydrocarbon liquid and at least one other component which is not solvated by the liquid and is capable of associating with the polymer produced, characterised in that (i) at least one of the monomers contains a hydroxymethylamino ($-NH\ CH_2OH$) or alkoxymethylamino ($-NH\ CH_2OR$) group, where R represents an alkyl group, and (ii) at least one other of the monomers contains a functional group which is capable of reacting with the said hydroxymethylamino or alkoxymethylamino group under the

- 4 -

conditions of polymerisation.

Ethylenically unsaturated monomers which contain a hydroxymethylamino or alkoxymethylamino group and are suitable for use in the present process include N-methylolacrylamide, N-methylolmethacrylamide and N-alkoxymethylacrylamides and N-alkoxymethylmethacryl-amides, where the alkoxy group contains from 1 to 4 carbon atoms, for example N-methoxymethylacrylamide, N-propoxymethylacrylamide, N-butoxymethylacrylamide, N-isobutoxymethylacrylamide and N-butoxymethylmethacryl-amide. Mixtures of hydroxymethylamino group-containing monomers and alkoxymethylamino group-containing monomers may also be used. Such monomers can be obtained, as is well known, by the reaction of formaldehyde with ethylenically unsaturated acid amides followed (in the case of the alkoxymethylamino compounds) by etherification of the methylol groups so introduced with a lower alcohol. Any small amounts of water present in these monomers, as a result of their normally being prepared under aqueous conditions, can be removed as an azeotrope with the aliphatic hydrocarbon during the polymerisation process and does not have any deleterious effect on the latter.

Ethylenically unsaturated monomers containing functional groups capable of reacting with the hydroxymethylamino or alkoxymethylamino groups in the foregoing monomers include in particular those monomers containing hydroxyl groups, carboxyl groups or carboxylic amide groups. All of these groups are capable, under appropriate conditions, of reacting with hydroxymethylamino or alkoxymethylamino groups with the formation of a covalent linkage. Monomers containing hydroxyl groups are, however, preferred. Examples of such monomers include hydroxyethyl acrylate, hydroxyethyl methacrylate, 2-hydroxypropyl methacrylate, acrylic acid, methacrylic acid, acrylamide and methacrylamide.

Preferably the monomers being polymerised in the process include, in addition to the monomers bearing reactive groups as described above, other ethylenically unsaturated monomers not carrying such reactive groups. Monomers of this class include especially the acrylic monomers, that is to say the alkyl esters of acrylic acid or methacrylic acid, such as methyl methacrylate, ethyl methacrylate, propyl methacrylate, butyl methacrylate, ethyl acrylate, butyl acrylate and 2-ethylhexyl acrylate. Furthermore, there may be included other monomers not of the acrylic type, for example vinyl acetate, vinyl propionate, acrylonitrile, styrene and vinyltoluene.

Where a monomer containing a functional hydroxyl group is present in the monomer mixture, it may be advantageous at the same time to include a monomer carrying a carboxyl group, since the carboxyl group can catalyse the crosslinking reaction between the hydroxyl groups and hydroxymethylamino or alkoxymethylamino groups present.

It is necessary that the mixture of monomers being polymerised should be soluble as a whole in the aliphatic hydrocarbon which is employed as the continuous phase in which the dispersion of polymer microparticles is produced. This condition will normally be satisfied by any of the monomer mixtures named in the foregoing description; an individual constituent of the mixture, more especially an unetherified methylolamide, may have only a limited solubility per se in the hydrocarbon, but it will normally be carried into solution by the other monomers present.

Preferably the mixture of monomers being polymerised comprises from 1% to 20% by weight of a monomer carrying a hydroxymethylamino group, or from 1% to 40% by weight of a monomer carrying an alkoxymethylamino group, together with from 1% to 40% by weight of a hydroxyl group-carrying monomer and from 1% to 5% by weight of a carboxyl group-carrying monomer, all percentage weights being based on the total monomer charge.

Suitable aliphatic hydrocarbons for use in the process of the invention include hexane, heptane and mixed petroleum fractions of various boiling point ranges which are predominantly aliphatic in nature but may contain minor proportions of aromatic hydrocarbons. Conveniently the aliphatic hydrocarbon or hydrocarbon mixture is chosen to have a boiling point lying in the optimum temperature range for polymerisation of the ethylenically unsaturated monomers, so that the polymerisation can be conducted under reflux conditions. A suitable such temperature for many common acrylic monomers is in the region of $100^{\circ}$C.

According to the invention, the polymer microparticles are produced by a process of dispersion polymerisation of the monomers in the presence of a dispersion stabiliser which has the ability to stabilise the microparticles against flocculation or aggregation, as they are formed, by the provision of a steric barrier surrounding the microparticles. The dispersion stabiliser may be a preformed substance which is dissolved in the hydrocarbon liquid in which the monomers are to be polymerised, or it may be formed in situ during the polymerisation from a polymeric precursor which is soluble in the hydrocarbon liquid and which undergoes copolymerisation or grafting with a portion of the monomers being polymerised. Such dispersion polymerisation processes are well known and are extensively described in the literature to which reference has been made above.

In all such dispersion polymerisation processes, the amphipathic stabilising agent is a substance the molecule of which contains a polymeric component which is solvatable by the liquid in which the dispersion is made and another component which is relatively non-solvatable by that liquid and is capable of associating with the polymer particles produced. Such a stabilising agent will be soluble as a whole in the dispersion liquid, but the resulting solution will usually contain both individual molecules and micellar aggregates of molecules, in equilibrium with each other. The type of stabilising agent preferred for use in the invention is a block or graft copolymer containing two types of polymeric component; one type consists of polymer chains which are solvatable by the hydrocarbon liquid and the other type consists of polymer chains of different polarity from those of the first type which accordingly are not solvatable by that liquid and are capable of becoming anchored to the polymer microparticles. A particularly useful form of such a stabilising agent is a graft copolymer comprising a polymer backbone, which is the non-solvatable or "anchor" component, and a plurality of solvatable polymer chains pendant from the backbone. Specific examples of such graft copolymers include those in which the backbone is an acrylic polymer chain, derived predominantly from methyl methacrylate, and the pendant chains are residues of poly(12-hydroxystearic acid) which are readily solvatable by an aliphatic hydrocarbon medium. These copolymers may be made, for example, by first reacting poly(12-hydroxystearic acid) with glycidyl acrylate or glycidyl methacrylate, whereby the terminal -COOH group in the polymeric acid is converted to an ester derivative containing a polymerisable unsaturated grouping, and then copolymerising that derivative with methyl methacrylate, optionally together with minor proportions of other copolymerisable monomers. By employing acrylic acid or methacrylic acid as such minor comonomers, it is possible to introduce carboxyl groups into the backbone chain of the graft copolymer with beneficial results inasmuch as the backbone is thereby rendered more polar than it is if composed of methyl methacrylate units alone. This increased polarity causes the backbone to be even less solvatable by an aliphatic hydrocarbon, and in consequence enhances the force whereby it becomes anchored to the microparticles.

If desired, the polymerisation mixture may also contain a catalyst for the reaction between the hydroxymethylamino or alkoxymethylamino groups and the co-reactive functional groups of the monomers present. Examples of such catalysts include p-toluene sulphonic acid, methanesulphonic acid, acid butyl maleate and acid butyl phosphate. However, as already indicated, catalysis of the cross-linking reaction can adequately be effected by arranging for the monomers to be polymerised to contain a minor proportion of one carrying carboxyl groups, for example acrylic acid. This method of catalysts is usually to be preferred over the use of an "external" catalyst, which may adversely affect the storage stability of a coating composition incorporating the microparticles, of the kind described below. An unsaturated acid in the unpolymerised state normally has a high dissociation constant and so is able to act as a good cross-linking catalyst, whilst once it has become copolymerised with the other monomers its dissociation constant falls and its continued presence thereafter is unlikely to cause instability of this sort.

By the above-described procedure, dispersions in hydrocarbon liquids may be obtained in which the cross-linked polymer microparticles of the disperse phase are of a size from 0.1 to 0.5 microns.

The chemical composition and degree of cross-linking of the microparticle polymer may be such that it has a Tg (glass-rubber transition temperature) below room temperature, in which case the microparticles will be rubbery in nature, or alternatively the Tg may be above room temperature, in which case the microparticles will be hard and glassy. Of the unsaturated monomers mentioned above, methyl methacrylate is an appropriate choice where it is desired that the polymer microparticles should have a high Tg value. Where the microparticles are required to be of low Tg, ethyl acrylate or vinyl acetate may be used, but it may be a more convenient alternative to copolymerise methyl methacrylate with minor proportions of "softening" monomers such as butyl acrylate or butyl methacrylate. It is preferred, however, that these softening monomers do not exceed 15% by weight of the total monomer composition; otherwise, there is a risk that the resulting polymer may be too soluble, even in a low-polarity hydrocarbon liquid, for dispersion polymerisation to give rise to a stable dispersion of microparticles. Certain other softening monomers, such as 2-ethoxyethyl acrylate or 2-ethoxyethyl methacrylate, may be used in proportions greater than 15% if desired, but these are not as readily accessible as the corresponding lower alkyl esters.

Polymer microparticles made according to the process of the invention are of value for incorporation into coating compositions in order to modify the characteristics, in particular the spray application properties, of the latter.

The application of coating compositions by a spraying technique is of especial importance in the automobile industry, and compositions presently available for this purpose are subject to two kinds of shortcoming. One such drawback arises in the case of the compositions which contain metallic flake pigments; these are the so-called "glamour metallic" finishes whereby a differential light reflection effect, depending upon the viewing angle, is achieved. Maximisation of this "flip" tone effect requires a high degree of control over the orientation of the metallic flake during the laying down and the curing of the coating film, and this in turn calls for careful formulation of the composition which is applied to the substrate in regard to both the film-forming resin and the liquid medium in which it is carried. Difficulties may be encountered in meeting this objective and at the same time achieving a high degree of gloss in the final finish such as is usually desired in the automotive field. We have now found that improved control of the metallic pigment in a coating composition of this type, whereby good "flip" effect may be ensured, is obtained when the composition includes a proportion of polymer microparticles according to the present invention.

Another drawback arises in coating compositions containing conventional pigments, used for the production of so-called "solid colour" finishes upon automobile bodies, in which the need to achieve good flow-out of the coating after spray application, in order to maximise gloss, may be difficult to reconcile with the prevention of excessive flow of the composition during the spraying operation in order that the phenomenon known as "sagging" or "running" may be avoided, especially at sharp edges or corners of a substrate of complicated shape. We find that by incorporating polymer microparticles according to the invention in such compositions, it is possible to apply by spraying a coating of adequate thickness for complete obliteration of the substrate without any tendency for sagging to occur, and yet subsequent flow-out of the coating is unimpaired and a high gloss finish is obtained.

Thus according to a further feature of the invention there is provided a coating composition comprising (A) a film-forming polymer, (B) a volatile organic liquid diluent in which the polymer is carried, and (C) crosslinked polymer microparticles as hereinbefore defined which are insoluble in and stably dispersed in the combination of the polymer (A) and the diluent (B).

The film-forming polymer constituent (A) of the coating composition according to the invention may be any of the polymers known to be useful in coating compositions. One suitable class of polymer consists of those which are derived from one or more ethylenically unsaturated monomers. Particularly useful members of this class are the acrylic addition polymers which are well-established for the production of coatings in the automobile industry, that is to say polymers or copolymers of one or more alkyl esters of acrylic acid or methacrylic acid, optionally together with other ethylenically unsaturated monomers. These polymers may be of either the thermoplastic type or the thermosetting, crosslinking type. Suitable acrylic esters for either type of polymer include methyl methaceylate, ethyl methacrylate, propyl methacrylate, butyl methacrylate, ethyl acrylate, butyl acrylate and 2-ethylhexyl acrylate. Suitable other, copolymerisable monomers include vinyl acetate, vinyl propionate, acrylonitrile, styrene and vinyl toluene. Where the polymer is required to be of the cross-linking type, suitable functional monomers to be used in addition to the latter include acrylic acid, methacrylic acid, hydroxyethyl acrylate, hydroxyethyl methacrylate, 2-hydroxypropyl acrylate, 2-hydroxypropyl methacrylate, N-(alkoxymethyl) acrylamides and N-(alkoxy methyl) methacrylamides, where the alkoxy groups may be, for example, a butoxy group, glycidyl acrylate and glycidyl methacrylate. The coating composition may in such a case contain also a cross-linking agent of known type such as a diisocyanate, a diepoxide or, especially, an amino resin. Particularly suitable cross-linking agents are melamine-formaldehyde condensates in which a substantial proportion of the methylol groups have been etherified ny reaction with butanol.

For the purposes of the foregoing general definition of the invention, the cross-linking agent, where present, is considered as being a part of the film-forming polymer (A).

The coating composition may incorporate a suitable catalyst for the cross-linking reaction between the acrylic polymer and the cross-linking agent, for example an acid-reacting compound such as acid butyl maleate, acid butyl phosphate or p-toluene sulphonic acid. Alternatively the catalytic action may be supplied ,by the incorporation of free acid groups in the acrylic polymer, for example by the use of acrylic acid or methacrylic acid as a comonomer in the preparation of the polymer.

The acrylic polymer may be prepared by solution polymerisation of the monomer(s), in the presence of suitable catalysts or initiators such as organic peroxides or azo compounds, e.g. benzoyl peroxide or azodiisobutyronitrile. Conveniently the polymerisation may be carried out in the same organic liquid that is to form the diluent constituent (B) of the coating composition, or in a liquid which is to form a part of that diluent. Alternatively the acrylic polymer may be prepared in a separate previous operation (e.g by aqueous emulsion polymerisation) and then dissolved in a suitable organic liquid.

Other suitable members of the class of polymer derived from ethylenically unsaturated monomers are vinyl copolymers, that is to say copolymers of vinyl esters of inorganic or organic acids, for example, vinyl chloride, vinyl acetate and vinyl propionate; the copolymers may optionally be partially hydrolysed so as to introduce vinyl alcohol units. An example of such a copolymer is that containing 91% vinyl chloride, 6% vinyl alcohol and 3% vinyl acetate by weight, sold commercially by Union Carbide Corporation under the name "Vinylite VAGH".

Instead of being a polymer derived from ethylenically unsaturated monomers, the polymer constituent (A) of the composition may be a film-forming polyester resin, by which term we mean any of those resins which are known in the art for use in surface coating compositions and which are essentially the products of condensation of polyhydric alcohols and polycarboxylic acids. We include in this term the alkyd resins which are obtained from such starting materials with the addition of constituents supplying residues of fatty acids derived from natural drying oils, or semi-drying oils, or even oils having no air-drying capabilities. We also include polyester resins not incorporating any natural oil residues. All these resins normally contain a proportion of free hydroxyl and/or carboxyl groups which are available for reaction with suitable cross-linking agents, such as those discussed above in connection with acrylic polymers.Where a cross-linking agent is employed, this is, for the purposes of the present invention, again considered to be a part of the film-forming constituent (A).

Suitable polyhydric alcohols for the production of polyester resins include ethylene glycol, propylene glycol, butylene glycol, 1:6-hexylene glycol, neopentyl glycol, diethylene glycol, triethylene glycol, tetraethylene glycol, glycerol, trimethylolpropane, trimethylolethane, pentaerythritol, dipentaerythritol, tripentaerythritol, hexane triol, oligomers of styrene and allyl alcohol (for example that sold by Monsanto Chemical Company under the designation RJ 100) and the condensation products of trimethylolpropane with ethylene oxide or propylene oxide (such as the products well known commercially as "Niax" triols). Suitable polycarboxylic acids include succinic acid (or its anhydride), adipic acid, azelaic acid, sebacic acid, maleic acid (or its anhydride), fumaric acid, muconic acid, itaconic acid, phthalic acid (or its anhydride) isophthalic acid, terephthalic acid, trimellitic acid (or its anhydride), and pyromellitic acid (or its anhydride). Where it is desired to produce air-drying alkyd resins, suitable drying oil fatty acids which may be used include those derived from linseed oil, soya bean oil, tall oil, dehydrated castor oil, fish oils or tung oil. Other oil fatty acids, of semi-drying or non-drying types, which may be used include those derived from safflower oil, sunflower oil and cottonseed oil. Monofunctional saturated carboxylic acids may also be incorporated in order to confer plasticity on the polyester. Such acids may be, for example, $C_4 - C_{20}$ saturated aliphatic acids, benzoic acid, p-tert-butyl benzoic acid and abietic acid; these may, in fact, be the only fatty acids present, in those cases where the polyester resin is to be cured by subsequent reaction of residual hydroxyl or carboxyl groups with a cross-linking agent. In addition, monofunctional hydroxy compounds may be incorporated in order to control the chain length of the polyester or to confer certain desirable compatibility properties upon it; suitable monohydroxy compounds include benzylalcohol, cyclohexyl alcohol, saturated or unsaturated fatty alcohols and condensation products of ethylene oxide or propylene oxide with monofunctional alcohols (e.g. the methoxy-polyethylene glycol obtained by reaction of ethylene oxide with methanol).

Suitable film-forming polyester resins also include "modified" alkyd resins, for example styrenated or methacrylated alkyds, urethane alkyds and epoxy alkyds.

As a further alternative, the polymer constituent (A) of the coating composition may be a cellulose ester, such as cellulose acetate butyrate or cellulose nitrate. In particular there may be mentioned as being suitable the grade of cellulose acetate butyrate marketed by Eastman Kodak and designated EAB 531-1, having an acetyl content of 3% and a butyryl content of 50% and a viscosity of 1-2 seconds as measured by ASTM method D-1343154T.

Yet another type of polymer which may be employed as the constituent (A) comprises the amino resins, which have already been mentioned in the role of cross-linking agents for acrylic polymers or polyester resins of the thermosetting type. These same amino resins can be employed as film-forming materials in their own right and, for this purpose, the preferred resins are again melamine-formaldehyde condensates in which a substantial proportion of the methylol groups are etherified by reaction with butanol.

In order to assist curing of the resin, there will preferably also be incorporated in the coating composition a suitable catalyst, such as one of those already described. From what has been said above, it will be clear that there may also be employed as the film-forming constituent (A) a mixture of a thermosetting acrylic polymer or polyester resin and a nitrogen resin in such proportions that part of the latter functions as cross-linking agent and part as a supplementary film-former in its own right.

According to one embodiment of this further feature of the invention, the film-forming polymer (A) is in a state of stable dispersion in the diluent liquid (B), which in such a case will be a non-solvent for the polymer. Methods of preparing such polymer dispersions are well-known in the art and have been referred to above in connection with the production of the polymer microparticles (C).

In another embodiment, the film-forming polymer (A) is dissolved in the diluent (B); the polymer may then be prepared by solution polymerisation of the constituent monomer or monomers, in the presence of suitable catalysts or initiators where necessary. Conveniently the polymerisation may be carried out in the same organic liquid that is to provide the diluent (B), or in a liquid which is to form part of that diluent. Alternatively the polymer (A) may be prepared in a separate previous operation (e.g. in the case of an acrylic polymer, by aqueous emulsion polymerisation of monomer or, in the case of a polyester resin, by melt polymerisation) and then dissolved in a suitable organic liquid.

In yet another embodiment, the film-forming polymer (A) may be partly in dispersion and partly in solution in the diluent (B).

The volatile organic liquid constituent (B) of the coating composition may be any of the liquids, or mixtures of liquids, which are conveniently used as polymer solvents in coating compositions, for example aliphatic hydrocarbons such as hexane and heptane, aromatic hydrocarbons such as toluene and xylene, and petroleum fractions of various boiling point ranges which are predominantly aliphatic but have a significant aromatic content, esters such as butyl acetate, ethylene glycol diacetate and 2-ethoxyethyl acetate, ketones such as acetone and methyl isobutyl ketone, and alcohols such as butyl alcohol. The actual liquid or mixture of liquids selected as the diluent (B) will depend upon the nature of the film-forming polymer (A), according to principles which are well-known in the coatings art, in order that the polymer shall be either soluble or insoluble in the diluent as the case may require.

By virtue of their cross-linked nature, the polymer microparticles (C) will be insoluble in the combination of the film-forming polymer (A) and the liquid diluent (B) irrespective of the nature of the latter constituents and of whether the polymer (A) is in solution or dispersion in the diluent (B). However, it is possible, when the diluent is of a polar nature, that the microparticles may be more or less extensively swollen in contact with it.

The incorporation of the polymer microparticles (C) into the combination of the film-forming polymer (A) and the liquid diluent (B) in order to form a coating composition according to the invention may be accomplished in various ways. Thus the dispersion of the microparticles in an aliphatic hydrocarbon obtained by the process hereinabove described may be directly blended with a solution or dispersion of the polymer (A) in the diluent (B). Alternatively, the microparticles may be separated from the dispersion in which they are made, for example by centrifuging, filtration or spray-drying, and then blended with a solution or dispersion of the polymer (A) in the diluent (B). Although in either case the polymer microparticles may be employed in the form in which they are produced by the dispersion polymerisation process previously referred to, it may be advantageous to subject the microparticles so obtained to a further treatment before they are incorporated into the coating composition of the invention. As already indicated, the microparticles are produced in dispersion in an aliphatic hydrocarbon. From the foregoing discussion it may, however, be anticipated that steric stabilising agents which are suitable for stabilising the microparticles in a simple low polarity liquid environment will not always effectively stabilise them when they are transferred to the environment of the combination of the film-forming polymer (A) in the liquid diluent (B). This does in fact prove to be the case in certain circumstances, for example where the diluent (B) is relatively highly polar or where the polymer (A) is poorly compatible with the stabilising chains present on the microparticles, resulting in the formation of "bits" in the blend obtained or, at worst, in gross flocculation or aggregation of the microparticles. It is possible, alternatively, for such destabilisation to occur subsequently, after application of the total coating composition to a substrate, with the production of films exhibiting poor gloss.

In order to overcome or mitigate these effects, it is a preferred feature of the invention that microparticles which have been made by the dispersion polymerisation process previously described are further associated with a polymer which is soluble in the volatile organic liquid constituent (B) of the coating composition and is also compatible with the film-forming polymer constituent (A). This further polymer, hereinafter referred to as the "auxiliary" polymer, is essentially non-cross-linked. The microparticles are most conveniently brought into association with the auxiliary polymer by following up the dispersion polymerisation process immediately with the polymerisation in the dispersion of further monomer, from which the auxiliary polymer is to be derived, in the original inert liquid medium and in the presence of the original stabilising agent. If desired, further stabilising agent may be added at this stage.

In general, the auxiliary polymer will be required to have a composition such that it is compatible with the film-forming polymer (A), including any cross-linking agent for the polymer; indeed it may be identical with that polymer and, in certain circumstances as described below, even wholly replace it. The monomer or monomers from which the auxiliary polymer is to be derived will be chosen with this requirement in mind, as will be apparent to those skilled in the art.

On introducing the microparticles so treated into the combination of the polymer (A) in the liquid (B), part of the auxiliary polymer may be dissolved away by that medium where it is of relatively high polarity, but this does not detract from the effectiveness of the auxiliary polymer in preventing severe flocculation or aggregation. If desired, the association of the auxiliary polymer with the microparticles may be enhanced by ensuring that covalent linkages are developed between the chains of the auxiliary polymer and those of the microparticles. This may be done, for example, by including, in the monomers from which the auxiliary polymer is derived, a monomer carrying groups which can react with residual reactive hydroxymethylamino or alkoxymethylamino groups in the microparticles; such a monomer may be a hydroxy monomer or a carboxy monomer, analogous to the reactive monomer used in the production of the microparticle proper.

When incorporating into the coating composition polymer microparticles which have been treated with an auxiliary polymer, it may be sufficient simply to add strong solvents to the dispersion of those treated microparticles, relying upon sufficient of the auxiliary polymer being dissolved away from the treated microparticles in order itself to provide the whole of the film-forming polymer constituent (A), whilst still leaving enough of that polymer associated with the microparticles to ensure their stabilisation. Alternatively, the dispersion of the treated microparticles may be blended with another film-forming polymer in the ways described above.

The polymer microparticles (C) are preferably present in the coating compositions of the invention in an amount of at least 2% by weight, more preferably at least 5% by weight, of the aggregate weight of the film-forming polymer (A) and the microparticles. For the purposes of this definition, the term "polymer microparticles" is to be understood as referring , in the case where auxiliary polymer is employed, to the microparticles proper together with that part of the auxiliary polymer associated therewith which cannot be dissolved away from the particles by the diluent (B).

The compositions used in the process of the invention may incorporate, in addition to the film-forming polymer (A), the diluent (B) and the polymer microparticles (C), pigments as conventionally used in the coatings art. Such pigments may range in particle size from 1 to 50 microns and may be inorganic in nature, for example titanium dioxide, iron oxide, chromium oxide, lead chromate or carbon black, or organic in nature, for example phthalocyanine blue, phthalocyanine green, carbazole violet, anthrapyrimidine yellow, flavanthrone yellow, isoindoline yellow, indanthrone blue, quinacridone violet and perylene red. Of particular interest in the context of the invention are metallic pigments consisting of flat flakes of aluminium, copper, tin, nickel or stainless steel, by the use of which there may be obtained the so-called "glamour metallic" finishes whereby a differential light reflection effect, depending upon the viewing angle, is achieved. Any of the above pigments may be present in the coating compositions in a proportion of from 2% to 50% of the aggregate weight of all the film-forming material present. The term "pigment" is here meant to embrace also conventional fillers and extenders, such as talc or kaolin.

Such pigments, whether metallic or otherwise, may be incorporated into the coating compositions with the aid of known dispersants, for example an acrylic polymer, which are compatible with the film-forming polymer (A).

If desired, the compositions may additionally incorporate other known additives, for example viscosity modifiers such as bentone or cellulose acetate butyrates.

As already indicated, there may further be incorporated a cross-linking agent to effect or assist the curing of the film-forming polymer (A), and also a suitable catalyst for the cross-linking reaction.

Coating compositions according to the invention may be applied to a substrate by any of the techniques known in the art, such as brushing, spraying, dipping or flowing, but spray application is of especial interest since the advantages conferred by the invention are then particularly apparent, as has been discussed above.

Any of the known spraying procedures may be used for applying the compositions, such as compressed air spraying, electrostatic spraying, hot spraying and airless spraying, and either manual or automatic methods are suitable. Under these conditions of application, coatings of excellent gloss are obtained which possess advantages over the coatings obtained according to the prior art in respect of the reduction of excessive flow on application, particularly at sharp edges or corners of a substrate of complicated shape, or the obliteration of scratch marks in the surface to be coated. Films of up to 4 mils dry thickness may be applied without any tendency for sagging, or "shear-iness" due to inadequate control of the orientation of any metallic pigment present, to occur.

Following application of the composition to the substrate, in the case where the film-forming polymer (A) is of the thermoplastic type, volatilisation may be allowed to occur at room temperature or the coating may be subjected to an elevated temperature, for example of up to 160°C. Where the polymer (A) is of the thermosetting type, it will normally be necessary to subject the coating to treatment at an elevated temperature, e.g. 80°C to 140°C, in order to bring about the cross-linking of the polymer, with the assistance of the cross-linking agent if also present.

Instead of using the coating composition of the invention for the production of a finish, or top-coat, it may be employed in a two-coat procedure commonly referred to as a "base-coat/clear-coat" procedure which is of special relevance to the production of the "glamour metallic" finishes referred to earlier. In this procedure there is first applied to the surface of the substrate a base-coat according to the invention containing the metallic pigment and formulated to give the maximum "flip" tone effect, and there is then applied over the base-coat an unpigmented top-coat which yields a high degree of gloss without in any way modifying the characteristics of the base-coat film. The unpigmented top-coat composition used in this procedure may be any of the compositions which are well known in the art to be suitable for that purpose; that is to say, there may be used as the film-forming polymer, for example, an acrylic polymer or a polyester resin of the kinds hereinbefore described, and that polymer or resin may be either in solution or in dispersion in a suitable carrier liquid. The film-forming polymer may be of either the thermoplastic or the thermosetting type, and in the latter case the top-coat composition will normally contain also a cross-linking agent, and optionally a catalyst, of the types described earlier. Where a heat treatment is required in order to cure the top-coat film, this operation may be utilised to bring about simultaneously any necessary curing of the base-coat film; alternatively, the base-coat film may be cured in a previous heat treatment step prior to the application of the top-coat.

The invention is illustrated but not limited by the following Examples, in which parts and percentages are by weight unless otherwise stated.

EXAMPLE 1

A. Preparation of Cross-linked Polymer Microparticles

To a vessel fitted with stirrer, thermometer and reflux condenser there was charged:-

| | |
|---|---|
| Aliphatic hydrocarbon (boiling range 140-156°C, aromatics content 0.05%) | 38.689 parts |
| Methyl methacrylate | 2.016 parts |
| Methacrylic acid | 0.040 part |
| Graft copolymer stabiliser (33% solution, as described below) | 0.748 part |
| Azodiisobutyronitrile | 0.160 part |

The vessel was purged with inert gas and the charge heated to 100°C with stirring. After the charge had been held at 100°C for 30 minutes in order to form a 'seed' polymer dispersion, the following pre-mixed ingredients were added to it at a uniform rate over 3 hours, the temperature again being maintained at 100°C:-

| | |
|---|---|
| Graft copolymer stabiliser (33% solution, as described below) | 7.009 parts |
| Methyl methacrylate | 32.871 parts |
| Methacrylic acid | 0.339 part |
| N-Butoxymethylacrylamide (60% solution in butanol/xylene) | 0.564 part |
| 2-Hydroxyethyl acrylate | 0.339 part |
| Azodiisobutyronitrile | 0.210 part |
| Aliphatic hydrocarbon (boiling range 140-156°C, aromatics content 0.05%) | 17.015 part |

After the addition was complete, the reaction mixture was held at 100°C for 1 hour to ensure full conversion of the monomers, and the temperature was thereafter raised to reflux at 142°C for 3-4 hours in order to complete the cross-linking of the particles. The product was a fine dispersion of cross-linked polymer particles, having a total solids content of 38.2%. The content of gelled material, insoluble in any solvent (as determined by extraction with tetrahydrofuran), was 25.8%.

The graft copolymer stabiliser used in the above preparation was obtained as follows. 12-hydroxystearic acid was self-condensed to an acid value of about 31 - 34 mg KOH/g (corresponding to a molecular weight of 1650 - 1800) and was then reacted with an equivalent amount of glycidyl methacrylate. The resulting unsaturated ester was copolymerised with methyl methacrylate and glycidyl methacrylate in the weight ratio 49 : 46 : 5 respectively, and the copolymer thus obtained was finally reacted with methacrylic acid and p-nitrobenzoic acid in the presence of a tertiary amine catalyst, in the proportions of 0.070 part of methacrylic acid and 0.109 part of p-nitrobenzoic acid for every 100 parts of the copolymer.

B.  Modification of Microparticles with Auxiliary Polymer.

To a vessel fitted as described in step (A) above, there were charged 58.136 parts of the dispersion obtained in step (A) and 12.581 parts of xylene.

The charge was heated to 115°C and maintained at that temperature whilst the following pre-mixed ingredients were added at a constant rate over 3 hours:-

| | |
|---|---|
| Methyl methacrylate | 3.036 parts |
| 2-Hydroxyethyl acrylate | 1.732 parts |
| Methacrylic acid | 0.450 part |
| Butyl methacrylate | 3.355 parts |
| 2-Ethylhexylacrylate | 3.464 parts |
| Styrene | 5.189 parts |
| tert-Butyl perbenzoate | 0.411 part |
| prim-Octyl mercaptan | 0.096 part |
| Graft copolymer stabiliser (33% solution, as described above) | 1.357 parts |

After the addition was complete, the reaction mixture was held at 115°C for 3 hours to ensure full conversion of the monomers. The mixture was then cooled to 100°C and there was added a mixture of 2.548 parts of butoxyethanol and 7.645 parts of butyl acetate.

The resulting dispersion had a total solids content of 37.0%, the content of insoluble gel (as determined by extraction with tetrahydrofuran) being 26.6%.

- 28 -

## EXAMPLE 2

### A. Preparation of Cross-linked Polymer Microparticles

To a vessel fitted with stirrer, thermometer and reflux condenser there was charged:-

| | |
|---|---|
| Aliphatic hydrocarbon (boiling range 200-240°C, aromatic content 0.5%) | 9.923 parts |
| Aliphatic hydrocarbon (boiling range 140-156°C, aromatic content 0.05%) | 24.555 parts |

The vessel was purged with inert gas and the charge heated to 100°C with stirring.

The following ingredients were premixed and added to the reactor:-

| | |
|---|---|
| Methyl methacrylate | 1.795 parts |
| Methacrylic acid | 0.037 part |
| Azodiisobutyronitrile | 0.143 part |
| primary-Octyl-mercaptan | 0.022 part |
| Graft copolymer stabiliser (33% solution, as described in Example 1) | 0.666 part |

The contents of the vessel were held at 100°C with stirring for 30 minutes to form a seed and the following pre-mixed ingredients were fed directly into the vessel at a uniform rate over 3 hours, the temperature again being maintained at 100°C with stirring and inert gas purge:-

| | |
|---|---|
| Graft copolymer stabiliser (33% solution, as described in Example 1) | 6.252 parts |
| Methyl methacrylate | 28.406 parts |
| Methacrylic acid | 0.302 part |
| Hydroxyethyl acrylate | 1.207 parts |
| N-Methylol acrylamide (60% solution in water) | 1.932 parts |

Azodiisobutyronitrile                                   0.188 part

Aliphatic hydrocarbon (boiling
range 140-156°C, aromatic
content 0.05%)                                          15.175 parts

After completion of the above addition, temperature of the reaction mixture was held at 100°C for a further 30 minutes with stirring and inert gas purge.

The following ingredients were premixed and added to the contents of the vessel:-

para-Toluene sulphonic acid            3.112 parts

Acetone                                6.224 parts

The temperature was then raised to 140°C, at which temperature the solvents present boiled and recycled. The small amount of water introduced with the N-methylol acrylamide was removed at a small separator in the recycle return line during the heating.

The product thus obtained was a fine dispersion of crosslinked polymer particles having a total solids content of 38.8% and a content of gelled material, insoluble in any solvent, of 36.9% (as determined by extraction with tetrahydrofuran).

B. Modification of Microparticles with Auxiliary Polymer.

To a vessel fitted as described in step (A) above there were charged 57.239 parts of the dispersion obtained as described in step (A). The charge was heated with stirring to reflux temperature (140°-145°C)

The following pre-mixed ingredients were added over 3 hours to the returning reflux solvent at a constant rate such that the monomers were diluted with at least an equal volume of the returning diluent distillate:-

Graft copolymer stabiliser
(33% solution, as described
in Example 1)                                   3.867 parts

Methyl methacrylate                             3.267 parts

Hydroxyethyl acrylate                           1.708 parts

Methacrylic acid                                0.170 part

Butyl methacrylate                              3.308 parts

2-Ethylhexyl acrylate                           3.415 parts

Styrene                                         5.116 parts

tert-Butyl perbenzoate                          0.339 part

After the addition was complete, the reaction mixture was held at recycle temperature for 2 hours to ensure full conversion of the monomers.

The mixture was then cooled to $100^{o}$C and there was added a mixture of:-

Butoxyethanol                                   5.064 parts

Butyl acetate                                  16.507 parts

The resulting dispersion had a total solids content of 41.4% and a content of gelled material, insoluble in any solvent, of 22.7% (as determined by extraction with tetrahydrofuran).


## EXAMPLE 3

## Preparation of Coating Compositions

The following series of ingredients identified in columns I, II and III respectively, were blended:-

| | I | II | III |
|---|---|---|---|
| Butylated melamine-formaldehyde resin (67% solution in butanol) | 9.13 parts | 9.13 parts | 9.13 parts |
| Flow-promoting polymer (10% solution in xylene) | 0.37 part | 0.37 part | 0.37 part |

|                                                                          | I           | II          | III         |
|--------------------------------------------------------------------------|-------------|-------------|-------------|
| Thermosetting acrylic polymer (65% solution in xylene/butanol)           | 34.92 parts | 34.92 parts | 44.81 parts |
| Modified microparticle dispersion from Example 1(B)                      | 16.64 parts | -           | -           |
| Modified microparticle dispersion from Example 2(B)                      | -           | 19.04 parts | -           |
| Transparent iron oxide millbase (16% iron oxide)                         | 1.34 parts  | 1.34 parts  | 1.34 parts  |
| Dispersion of aluminium flake (20% paste)                                | 8.73 parts  | 8.73 parts  | 8.73 parts  |
| Isopropanol                                                              | 9.04 parts  | 9.04 parts  | 15.51 parts |
| Butyl acetate                                                            | 6.03 parts  | 6.03 parts  | 10.34 parts |
| Aliphatic hydrocarbon (boiling range 100-120°C)                          | 5.02 parts  | 5.02 parts  | 8.61 parts  |

Paint compositions I and II were both thinned with xylene to a viscosity of 33 seconds at 25°C when measured in a B.S. B3 cup. Two coats of each paint were applied wet-on-wet to primed metal panels, allowing a 1-minute flash-off period between coats. After a final 2-minute flash-off period, the panels were stoved at 127°C for 30 minutes.

The control of the aluminium flake and resistance to sagging were observed to be superior in the case of the coating from compositions I and II than in the case of that from composition III.

The thermosetting acrylic polymer used in the above-described compositions was a copolymer of styrene (30%), methyl methacrylate (15%), butyl methacrylate (17%), 2-ethylhexyl acrylate (20%), hydroxyethylacrylate (15%) and methacrylic acid (3%), the percentages being by weight. The polymer had a weight average molecular weight of 10,000 - 20,000.

0021618

WE CLAIM:-

1. A process for the production of crosslinked addition polymer microparticles comprising the dispersion polymerisation of ethylenically unsaturated monomers in an aliphatic hydrocarbon liquid which is a solvent for the monomers but is a non-solvent for the polymer produced, in the presence of a dispersion stabiliser the molecule of which comprises at least one polymeric component which is solvated by the hydrocarbon liquid and at least one other component which is not solvated by the liquid and is capable of associating with the polymer produced, characterised in that (i) at least one of the monomers contains a hydroxymethylamino ($-NH\ CH_2OH$) or alkoxymethylamino ($-NH\ CH_2OR$) group, where R represents an alkyl group, and (ii) at least one other of the monomers contains a functional group which is capable of reacting with the said hydroxymethylamino or alkoxymethylamino group under the conditions of polymerisation.

2. A process as claimed in claim 1, wherein the functional groups capable of reacting with the hydroxymethylamino or alkoxymethylamino groups are selected from hydroxyl, carboxyl and carboxylic amide groups.

3. A process as claimed in claim 2, wherein the mixture of monomers which is dispersion polymerised comprises from 1% to 20% by weight of a monomer carrying a hydroxymethylamino group, or from 1% to 40% by weight of a monomer carrying an alkoxymethylamino group, together with from 1% to 40% by weight of a hydroxyl group-carrying monomer and from 1% to 5% by weight of a carboxyl group-carrying monomer, all percentage weights being based on the total monomer charge.

4.    A process as claimed in any one of claims 1 to 3, wherein the dispersion stabiliser is a block or graft copolymer containing one type of polymeric component consisting of chains which are solvatable by the hydrocarbon liquid and another type of polymeric component consisting of chains of different polarity from those of the first type which are not solvatable by the hydrocarbon liquid and are capable of becoming anchored to the polymer microparticles.

5.    A process as claimed in claim 4, wherein the stabiliser is a graft copolymer comprising a polymer backbone which is an acrylic polymer chain derived predominantly from methyl methacrylate, and which is the non-solvatable component, and a plurality of solvatable polymer chains pendant from the backbone which are residues of poly(12-hydroxystearic acid).

6.    A process as claimed in any one of claims 1 to 5, wherein the polymerisation mixture contains a catalyst for the reaction between the hydroxymethylamino or alkoxymethylamino groups and the co-reactive functional groups.

7.    A coating composition comprising (A) a film-forming polymer, (B) a volatile organic liquid diluent in which the polymer is carried, and (C) crosslinked polymer microparticles as claimed in any one of claims 1 to 6, which are insoluble in and stably dispersed in the combination of the polymer (A) and the diluent (B).

8.    A coating composition as claimed in claim 7, wherein the film-forming polymer (A) is an acrylic addition polymer.

9.    A coating composition as claimed in claim 7 or claim 8, wherein the microparticles are further associated with a polymer, hereinafter referred to as the "auxiliary" polymer, which is soluble in the diluent (B) of the composition and is compatible with the polymer (A).

10. A coating composition as claimed in any one of claims 7 to 9, wherein the polymer microparticles (C), together with that part of any auxiliary polymer present which is not dissolved away from the microparticles by the diluent (B), constitute at least 2% of the aggregate weight of the polymer (A), the microparticles and the said part of any auxiliary polymer present.

0021618

European Patent Office

**EUROPEAN SEARCH REPORT**

Application number

EP 80 30 1779

| | **DOCUMENTS CONSIDERED TO BE RELEVANT** | | **CLASSIFICATION OF THE APPLICATION (Int. Cl. 3)** |
|---|---|---|---|
| Category | Citation of document with indication, where appropriate, of relevant passages | Relevant to claim | |
| X | FR - A - 2 327 294 (PPG INDUSTRIES INC.)<br>* Claims 1,2 *<br>-- | 1,4,5 | C 08 F 2/08<br>C 09 D 3/00 |
| | CHEMICAL ABSTRACTS, vol. 83, no. 8, August 25, 1975, page 216, abstract 62054t, Columbus, Ohio, USA<br>& JP - A - 74 85182 (DAINIPPON INK AND CHEMICALS, INC.) ( 15-08-1974)<br>* Abstract *<br>-- | 1,4,5 | |
| A | FR - A - 2 304 622 (PPG INDUSTRIES INC.) | | **TECHNICAL FIELDS SEARCHED (Int.Cl. 3)**<br><br>C 08 F 2/08<br>2/14 |
| A | US - A - 3 686 111 (J.M. MAKHLOUF et al. ) | | |
| A | FR - A - 2 164 687 (I.C.I.)<br>---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-09-1980 | MEULEMANS |

EPO Form 1503.1  06.78